# EUROPEAN PATENT SPECIFICATION

(11) **EP 0 347 188 B1**
(45) Date of publication and mention of the grant of the patent: **20.04.1994**
(21) Application number: 89305992.3
(22) Date of filing: 13.06.1989
(51) Int. Cl.: B01D 29/07

(54) **A filter arrangement**
Filteranordnung
Assemblage de filtre

(30) Priority: 15.06.1988 US 206676
(43) Date of publication of application: 20.12.1989
(73) Proprietor: PALL CORPORATION, Glen Cove, New York 11542 (US)
(72) Inventor: Miller, John David, Ithica New York 14850 (US); Swiezbin, Joseph R., Glen Cove New York 11542 (US)
(74) Representative: Knott, Stephen Gilbert

(56) References cited:
- DE-A- 2 034 669
- DE-A- 3 219 671
- FR-A- 2 490 970
- GB-A- 1 277 588
- GB-A- 2 156 232
- US-A- 3 280 985

## Description

The present invention relates to a filter arrangement, in particular, a corrugated filter arrangement, for removing one or more substances from a fluid flowing through the filter arrangement.

US-A-3280985 discloses a fluid filter formed by two joined webs which are pleated. One web is folded to form ribs which may extend perpendicular to the length of the pleats. The ribs act to space adjacent pleats by a predetermined distance.

GB-A-1277588 discloses a filter material provided on one or both faces with parallel ribbons of a synthetic plastics material. The ribboned material is pleated with the ribbons extending perpendicular to the pleats. The plastics material remains molten during pleating and the ribbons on adjacent pleat surfaces on one or both sides of the material adhere to one another to hold the pleats together.

According to the present invention, there is provided a filter arrangement comprising a porous support layer which has first and second surfaces, a porous filter layer which is positioned near the first surface of the porous support layer, and a plurality of polymeric beads which are disposed in parallel strips on only the second surface of the porous support layer, the filter arrangement being corrugated to define pleats extending generally perpendicular to the polymeric beads wherein each pleat includes an open end, a bight end, and first and second opposing sides with a portion of the opposing sides within each pleat being in essentially parallel relationship, and wherein each bead extends from the open end of the pleat along the first side to the bight end and from the bight end of the pleat along the second side to the open end, the portions of each bead which extend along the essentially parallel portions of the opposing sides of the pleat comprising a hot melt adhesive and being joined to one another by heat setting.

The support layer preferably has greater mechanical strength or toughness than the filter layer, which is frequently delicate. Consequently, by disposing the beads on the surface of the support layer rather than directly on the filter layer, the filter layer is protected from tearing or excessive distortion when the filter arrangement is corrugated or used to filter fluids. Further, by joining the opposing portions of each bead with the pleats, flow channels are defined within each pleat. These flow channels are maintained relatively open by the joined portions of the beads even when the filter arrangement is subjected to high pressure liquids or pulsating flow. Thus, a filter arrangement according to the present invention provides more reliable service and a greater service life than many conventional filters.

Figure 1 is an elevation view of a corrugated filter arrangement embodying the present invention.

Figure 2 is a cross-sectional plan view of the corrugated filter arrangement of Figure 1 as viewed along lines II-II.

Figure 3 is a perspective view of an uncorrugated filter arrangement.

Figures 4a-4f are cross-sectional views of various modifications of the polymeric beads of the filter arrangement of Figure 1.

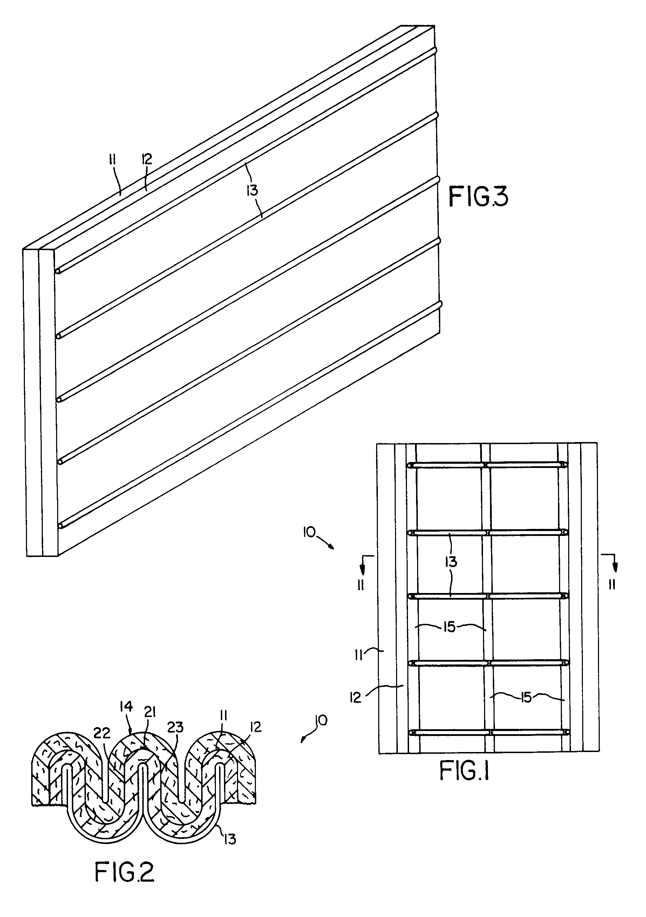

As shown in Figures 1 and 2, one example of a filter arrangement 10 embodying the present invention generally comprises a porous filter layer 11, a porous support layer 12, and several polymeric beads 13 disposed in parallel strips along the support layer 12. The exemplary filter arrangement 10 is corrugated to form pleats 14 which extend generally perpendicular to the beads 13. Within each pleat 14 the beads 13 are joined to themselves to define flow channels 15 within the pleat 14 and ensure proper fluid flow through the pleat 14.

The filter layer 11 may be any suitable filter medium. For example, the filter medium may be fashioned as a membrane or a woven or nonwoven fibrous sheet and may be fabricated from a natural or synthetic polymer or glass. Thus, the filter medium may comprise a nonwoven sheet principally including cellulose fibers or essentially consisting of glass fibers with a resin binder. Further, the filter medium may have any desired pore structure, including a graded pore structure, and any desired rated pore size.

The support layer 12 may be formed from a variety of suitable porous materials. For example, the support layer 12 may be fashioned from a woven or, preferably, nonwoven fibrous sheet and may be fabricated from a natural or synthetic polymer or glass. The rated pore size of the support layer 12 is preferably greater than the rate pore size of the filter layer 11. In accordance with one aspect of the invention, the support layer 12 has greater mechanical strength than the filter layer 11 and, therefore, serves to protect the typically delicate filter layer 11 from tearing or distortion during corrugation or use.

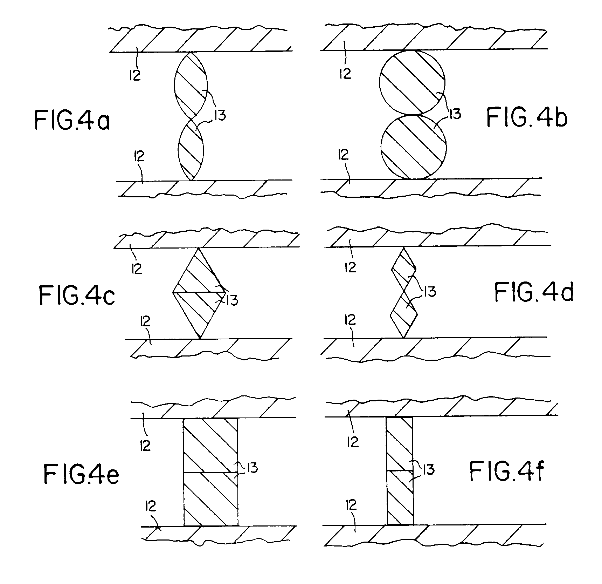

The filter layer 11 and the support layer 12 form a composite, as shown in Figure 3. In the exemplary filter arrangement 10, one surface of the filter layer 11 is disposed immediately adjacent to a first surface of the support layer 12. Alternatively, the composite may include one or more intermediate layers interposed between the filter layer and the support layer. Further, in the exemplary filter arrangement 10, the support layer 12 and beads 13 are disposed along only one surface, preferably the downstream surface, of the filter layer 11. Alternatively, the composite may include a support layer and beads provided along both the upstream surface and the downstream surface of the filter layer.

The polymeric beads may be formed from a variety of materials including many thermoplastic or thermosetting materials. Thus, the polymeric beads may be formed from a material comprising a polyester, polyamide, or polyolefin resin. Further, the polymeric beads 13 may be applied in parallel strips along the second surface of the support layer 12 in any suitable manner. For example, the polymeric beads may be formed from a hot melt adhesive and applied continuously from an evenly spaced multi-orifice dispensing head with the support layer 12 moving under the dispensing head, preferably at a constant velocity, producing several continuous, parallel beads. The hot melt adhesive may be applied to the support layer 12 either before or, preferably, after the support layer 12 and the filter layer 11 have been formed into the composite.

In a modification of this method, the hot melt adhesive may be applied intermittently from the dispensing head or from an unevenly spaced multi-orifice dispensing head to produce several discontinuous, parallel beads or several unevenly spaced parallel beads. In other alternatives, a granular polymeric material may be applied by extrusion from a multi-orifice extrusion head; a plastisol or polyurethane may be applied from a multi-orifice dispenser and then cured with an in-line heating device; or a solvent based adhesive or potting compound may be applied from a multi-orifice dispenser and the solvent may then be flashed by a heating/ventilation device.

As applied to the surface layer 12, the bead material preferably has a surface tension high enough to prevent excessive wetting of the support layer 12 or wicking through the support layer 12 but not so high as to prevent adhesion between the bead 13 and the support layer 12. This minimizes flow restriction through the exemplary filter arrangement since the surface of the support layer 12 which is in contact with the bead 13 is effectively blocked. The contact angle between the bead 13 and the support layer 12, as measured by the Sessile method, may preferably be in the range from about 100° to about 120°.

Various suitable cross-sectional shapes of the beads 13 are shown in Figures 4a-4f. The most preferred shape is the needle-like cross-section shown in Figure 4a. This shape minimizes the contact area between the bead 13 and the support layer 12. However, this shape is difficult to produce at reasonable production rates. For large scale production, the circular cross-section shown in Figure 4b is preferred. Other suitable shapes include the triangular, diamond, square, and rectangular cross-sections shown in Figures 4c-4f, respectively.

The size of each bead and the spacing between the beads may vary without departing from the scope of the invention. The size of the beads is determined by the size of the orifice in the dispensing head, the relative velocity between the dispensing head and the support layer 12, and the viscosity of the bead material. For many applications, the diameter of the beads may preferably be in the range from about 0,1 to about 0,5 mm (about 4 to about 20 mils).

The spacing between beads is preferably selected so that the stress deformation, i.e., deflection, of the pleated composite does not exceed either of two conditions: (1) the elastic limit of the filter medium comprising the filter layer 11, i.e., the maximum unit of stress beyond which the filter medium will not return to its original shape, is not exceeded and (2) the deflection of the composite during normal operation does not increase the flow resistance in the flow channels 15 more than 10 percent. For many applications, the spacing between evenly spaced beads is preferably such that about 5 to about 20 beads per 2,54 cm (1 inch) or, most preferably, about 8 to about 15 beads per 2,54 cm (1 inch) are applied to the support layer 12.

Once the beads 13 have been applied to the support layer 12, the filter layer 11 and the support layer 12 with the beads 13 are fed into a corrugator, e.g., a Chandler "grab and fold" type corrugator or a Rabofsky "cam actuated blade" type corrugator. The filter layer 11 and the support layer 12 may be formed into the composite before being fed into the corrugator or, preferably, the filter layer 11 and the support layer 12 with the beads 13 may be fed individually into the corrugator which then forms the composite at the same time it forms the pleats 14 in the filter arrangement 10.

As shown in Figure 2, each pleat 14 extends generally perpendicular to the beads 13 and includes an open end 20, a bight end 21, and first and second opposing sides 22, 23. In accordance with another aspect of the invention, the portions of each bead 13 which extend along the opposing sides 22, 23 of each pleat are joined to one another, defining flow channels 15 within each pleat 14 between adjacent beads 13 and the opposing sides 22, 23. Because the support layer 12 and beads 13 are preferably positioned on the downstream surface of the filter layer 11 to resist the pressure drop across the filter arrangement 10 during normal operation, the flow channels 15 are preferably drainage channels.

Care should be taken in the alignment of the support layer 12 within the corrugator to ensure that the beads 13 oppose themselves in the pleats 14. If the beads 13 are formed from a hot melt adhesive, heated panels in the corrugator may be used to tack the beads together. Beads comprising other types of materials may require coating by an adhesive or softening by a solvent for this purpose. After the filter arrangement 10 has been corrugated, it may be desirable to set the tacked beads in a forced convection oven. It may also be desirable to cure any binders in the filter medium of the filter layer 11 at the same time the beads 13 are being set. Alternatively, the beads 13 may be set and the filter medium may be cured in a tunnel oven during a continuous production process. Of course, the setting of the beads and the curing of the filter medium should be done at temperatures which are not deleterious to the other components of the filter arrangement. Further, all of the cured components of the filter arrangement should be compatible with the fluid to be filtered.

In corrugating the filter arrangement 10, and setting the beads 13, each bead 13 in the pleat 14 is preferably joined to itself the entire distance from the bight end 21 to the open end 20 of the pleat 14. Further, the radius at the bight end 21 of the pleat 14 is preferably as small as possible, preferably zero, to maximize resistance to fatigue failure which may result from flexure of the filter arrangement 10 during pulsating flow conditions. However, the beads 13 must not be over-compressed which would cause excessive blinding of the filter arrangement 10 and would reduce the cross-sectional area of the flow channel 15. Thus, when corrugating the filter arrangement 10, it may be desirable to secure the filter arrangement 10 in a spring-loaded fixture with positive stops to prevent over-compression and a slight reverse-curve to ensure the minimum radius at the bight end 21 of the pleat 13.

By joining the opposing portions of each bead 13, the flow channels 15 within each pleat 14 remain relatively open even when the filter arrangement 10 is used to filter a pulsating flow or liquids at high differential pressures, e.g., 3,45 to 34,5 bar (50 to 500 psi), across the filter arrangement 10. Thus, a filter arrangement according to the present invention has a greater resistance to flow fatigue and, therefore, provides more reliable service and a greater service life than many conventional filters.

The filter arrangement according to the present invention may be incorporated into a wide variety of filters. For example, the filter arrangement may be incorporated into a flat pack or panel-type filter which could be utilized in in-line or axial flow applications. Alternatively, the filter arrangement may be formed into a generally cylindrical configuration and incorporated, along with any necessary end caps, core, spacers, or exterior restraints, into the cylindrical filter for radial outside-in or inside-out flow applications.

Two specific examples of a filter arrangement according to the present invention are set forth below. These examples are expected to prove particularly effective in use.

### Example 1:

The filter layer is formed from a filter medium principally comprising cellulose fibers such as cotton fibers and further comprising glass fibers to improve efficiency and polyester fibers to improve its strength. These fibers may be bound by a phenolic resin. Such a filter medium is available from James River Corporation. Preferably, the filter medium is not cured prior to corrugation and has a rated pore size in the range from about 3 µm to about 25 µm.

The support layer is a cellulose paper available from Pallflex Corporation under the trade designation D4D®. The beads are formed from a polyamide hot melt adhesive available from Henkle Inc. under the trade designation Macromelt 6300® and are continuously applied to the downstream surface of the support layer from an evenly spaced multi-orifice dispensing head. The uncured filter layer and the support layer with the beads are then individually fed to a corrugator which forms the composite with the upstream surface of the support layer lying adjacent to the downstream surface of the filter layer and which also forms pleats extending generally perpendicular to the beads. Within each pleat, the opposing portions of the beads abut one another. Hot plates positioned within the corrugator soften the beads and tack the opposing portions of the beads together. The corrugated filter arrangement is then placed in a spring-loaded fixture with positive stops and a slight reverse curve and is heated in a convection oven to about 325° for about 15 minutes. This heating both sets the joined portion of the beads and cures the filter medium.

### Example 2:

The filter layer is formed from a filter medium consisting essentially of glass fibers with a resin binder. Such a filter medium is available from Hollingsworth and Vose Corporation. Further, this filter media may have a rated pore size in the range from about 1 µm to about 50 µm. The support layer is a paper available from Pallflex Corporation under the trade designation D4D®. The beads are formed from a polyamide hot melt adhesive available from Henkle Inc. under the trade designation Macromelt 6300® and are continuously applied to the downstream surface of the support layer from an evenly spaced multi-orifice dispensing head. The filter layer and the support layer with the beads are then individually fed to a corrugator which forms the composite with the upstream surface of the support layer lying adjacent to the downstream surface of the filter layer and also forms pleats extending generally perpendicular to the beads. Within each pleat, the opposing portions of the beads abut one another. Hot plates positioned within the corrugator soften the beads and tack the opposing portions of the beads together. The corrugated filter arrangement is them placed in a spring-loaded fixture with positive stops and a slight reverse curve and is heated in a convection oven to about 325° for about 15 minutes. This heating sets the joined portion of the beads.

Although the present invention has been described in terms of an exemplary embodiment and two examples, it is not limited to this embodiment or these examples. Alternative embodiments, examples, and modifications which would still be encompassed by the invention may be made by those skilled in the art, particularly in light of the foregoing teachings. Therefore, the following claims are intended to cover any alternative embodiments, examples, modifications, or equivalents which may be included within the spirit and scope of the invention as defined by the claims.

## Claims

1. A filter arrangement comprising a porous support layer (12) which has first and second surfaces, a porous filter layer (11) which is positioned near the first surface of the porous support layer (12), and a plurality of polymeric beads (13) which are disposed in parallel strips on only the second surface of the porous support layer (12), the filter arrangement being corrugated to define pleats (14) extending generally perpendicular to the polymeric beads (13) wherein each pleat (14) includes an open end, a bight end, and first and second opposing sides with a portion of the opposing sides within each pleat (14) being in essentially parallel relationship, and wherein each bead (13) extends from the open end of the pleat (14) along the first side to the bight end and from the bight end of the pleat (14) along the second side to the open end, the portions of each bead (13) which extend along the essentially parallel portions of the opposing sides of the pleat (14) comprising a hot melt adhesive and being joined to one another by heat setting.

2. The filter arrangement of claim 1 wherein the porous support layer (12) principally comprises cellulose fibers.

3. The filter arrangement of claim 1 wherein the porous support layer (12) comprises a nonwoven web of fibers.

4. The filter arrangement of claim 1 wherein the porous support layer (12) has a larger rated pore size than the porous filter layer (11).

5. The filter arrangement of claim 1 wherein the first and second surfaces of the porous support layer (12) respectively comprise upstream and downstream surfaces.

6. The filter arrangement of claim 1 wherein the porous filter layer (11) principally comprises cellulose fibers.

7. The filter arrangement of claim 1 wherein the porous filter layer (11) consists essentially of glass fibers and a resin binder.

8. The filter arrangement of claim 1 wherein the rated pore size of the porous filter layer is no greater than 50 µm.

9. The filter arrangement of claim 1 wherein the porous filter layer (11) has a first surface disposed immediately adjacent to the first surface of the porous support layer (12).

10. The filter arrangement of claim 1 wherein each bead (13) comprises a continuous strip.

11. The filter arrangement of claim 1 wherein each bead (13) is formed from a material which comprises a polyamide.

12. The filter arrangement of claim 1 wherein each bead (13) is joined to the second surface of the porous support layer (12).

13. The filter arrangement of claim 1 wherein each bead (13) has a generally circular cross section.

14. The filter arrangement of claim 1 wherein the bead portions are fused to one another.

15. The filter, arrangement of claim 1 where the porous filter medium (11) principally includes cellulose fibers and further includes glass fibers, polyester fibers, and a resin binder, and the porous support medium (12) principally includes cellulose fibers and has a rated pore size greater than the pore size of the porous filter layer (11), and where the polymeric beads (13) are composed of polyamide resin and where the polyamide beads extending along parallel portions of opposing sides of the pleat (14) are fused to one another.

16. The filter arrangement of claim 15 wherein the porous filter layer (11) has a rated pore size in the range from about 3 to about 25 µm.

17. The filter arrangement of claim 1 where the porous filter layer (11) consists essentially of glass fibers and a resin binder and the porous support layer (12) principally includes cellulose fibers with a rated pore size greater than the rated pore size of the porous filter layer (11) and where the polymeric beads (13) extending along the parallel portions of opposing sides of the pleat (14) are fused to one another.

18. The filter arrangement of claim 17 wherein the porous filter layer (11) has a rated pore size in the range from about 1 to 50 µm.

## Patentansprüche

1. Filteranordnung, aufweisend eine poröse Trägerschicht (12), die eine erste und eine zweite Oberfläche hat, eine poröse Filterschicht (11), die nahe der ersten Oberfläche der porösen Trägerschicht (12) positioniert ist, und eine Vielzahl von Polymer-Wülsten (13), die in parallelen Streifen auf nur der zweiten Oberfläche der porösen Trägerschicht (12) angeordnet ist, wobei die Filteranordnung gewellt ist, um Falten (14) zu definieren. die sich im allgemeinen senkrecht zu den Polymer-Wülsten (13) erstrecken, wobei jede Falte ein offenes Ende, ein Schleifenende und erste und zweite gegenüberliegende Seiten mit einem Abschnitt der gegenüberliegenden Seiten innerhalb jeder Falte (14), welche in im wesentlichen paralleler Beziehung ist, umfaßt, und, bei der sich jede Wulst (13) von dem offenen Ende der Falte (14) entlang der ersten Seite zu dem Schleifenende und von dem Schleifenende der Falte (14) entlang der zweiten Seite zu dem offenen Ende erstreckt, wobei die Abschnitte jeder Wulst (13), die sich entlang der im wesentlichen parallelen Abschnitte der gegenüberliegenden Seiten der Falte (14) erstrecken, einen Heißkleber aufweisen, und miteinander durch Heißfixierung verbunden werden.

2. Filteranordnung nach Anspruch 1, wobei die poröse Trägerschicht (12) hauptsächlich Zellulosefasern aufweist.

3. Filteranordnung nach Anspruch 1, wobei die poröse Trägerschicht (12) eine nichtgewebte Fasermatte aufweist.

4. Filteranordnung nach Anspruch 1, wobei die poröse Trägerschicht (12) eine größere spezifizierte Porengröße als die poröse Filterschicht (11) hat.

5. Filteranordnung nach Anspruch 1, wobei die ersten und zweiten Oberflächen der porösen Trägerschicht (12) jeweils stromaufwärtige und stromabwärtige Oberflächen aufweisen.

6. Filteranordnung nach Anspruch 1, wobei die poröse Filterschicht (11) hauptsächlich Zellulosefasern aufweist.

7. Filteranordnung nach Anspruch 1, wobei die poröse Filterschicht (11) im wesentlichen aus Glasfasern und einem Harz-Bindemittel besteht.

8. Filteranordnung nach Anspruch 1, wobei die spezifizierte Porengröße der porösen Filterschicht nicht größer als 50 µm ist.

9. Filteranordnung nach Anspruch 1, wobei die poröse Filterschicht (11) eine erste Oberfläche hat, die unmittelbar an die erste Oberfläche der porösen Trägerschicht (12) angrenzend angeordnet ist.

10. Filteranordnung nach Anspruch 1, wobei jede Wulst (13) einen durchgehenden Streifen aufweist.

11. Filteranordnung nach Anspruch 1, wobei jede Wulst (13) aus einem Material gebildet ist, das ein Polyamid aufweist.

12. Filteranordnung nach Anspruch 1, wobei jede Wulst (13) mit der zweiten Oberfläche der porösen Trägerschicht (12) verbunden ist.

13. Filteranordnung nach Anspruch 1, wobei jede Wulst (13) einen im allgemeinen kreisförmigen Querschnitt hat.

14. Filteranordnung nach Anspruch 1, wobei die Wulstabschnitte miteinander verschmolzen sind.

15. Filteranordnung nach Anspruch 1, wobei das poröse Filtermedium (11) hauptsächlich Zellulosefasern beinhaltet und zusätzlich Glasfasern, Polyesterfasern und ein Harz-Bindemittel beinhaltet und das poröse Trägermedium (12) hauptsächlich Zellulosefasern beinhaltet und eine spezifizierte Porengröße hat, die größer als die Porengröße der porösen Filterschicht (11) ist, und wobei die Polymer-Wülste (13) aus Polyamid-Harz zusammengesetzt sind und wobei die Polyamid-Wülste, die sich entlang paralleler Abschnitte von gegenüberliegenden Seiten der Falte (14) erstrecken, miteinander verschmolzen sind.

16. Filteranordnung nach Anspruch 15, wobei die poröse Filterschicht (11) eine spezifizierte Porengröße im Bereich von etwa 3 bis etwa 25 µm hat.

17. Filteranordnung nach Anspruch 1, wobei die poröse Filterschicht (11) im wesentlichen aus Glasfasern und einem Harz-Bindemittel besteht und wobei die poröse Trägerschicht (12) hauptsächlich Zellulosefasern mit einer spezifizierten Porengröße aufweist, die größer als die spezifizierte Porengröße der porösen Filterschicht (11) ist, und wobei die Polymer-Wülste (13), die sich entlang der parallelen Abschnitte der gegenüberliegenden Seiten der Falte (14) erstrecken, miteinander verschmolzen sind.

18. Filteranordnung nach Anspruch 17, wobei die poröse Filterschicht (11) eine spezifizierte Porengröße im Bereich von etwa 1 bis 50 µm hat.

## Revendications

1. Ensemble de filtre comprenant une couche poreuse (12) de support ayant une première et une seconde surface, une couche poreuse (11) de filtration placée près de la première surface de la couche poreuse de support (12), et plusieurs cordons polymères (13) disposés en bandes parallèles sur la seconde surface seulement de la couche poreuse de support (12), l'ensemble de filtre étant ondulé afin qu'il délimite des plis (14) qui ont une direction générale perpendiculaire à celle des cordons polymères (13), chaque pli (14) comprenant une extrémité ouverte, une extrémité d'anse et un premier et un second côté opposé, une partie des côtés opposés dans chaque pli (14) ayant une disposition relative essentiellement parallèle, chaque cordon (13) partant de l'extrémité ouverte du pli (14) le long du premier côté vers l'extrémité d'anse et de l'extrémité d'anse du pli (14) le long du second côté vers l'extrémité ouverte, les parties de chaque cordon (13) qui sont disposées le long des parties essentiellement parallèles des côtés opposés du pli (14) ayant un adhésif thermofusible et étant raccordées mutuellement par durcissement par chauffage.

2. Ensemble de filtre selon la revendication 1, dans lequel la couche poreuse de support (12) contient des fibres de cellulose.

3. Ensemble de filtre selon la revendication 1, dans lequel la couche poreuse de support (12) est une nappe non tissée de fibres.

4. Ensemble de filtre selon la revendication 1, dans lequel la couche poreuse de support (12) a une porosité nominale supérieure à celle de la couche poreuse de filtration (11).

5. Ensemble de filtre selon la revendication 1, dans lequel la première et la seconde surface de la couche poreuse de support (12) sont respectivement les surfaces amont et aval.

6. Ensemble de filtre selon la revendication 1, dans lequel la couche poreuse de filtration (11) contient essentiellement des fibres de cellulose.

7. Ensemble de filtre selon la revendication 1, dans lequel la couche poreuse de filtration (11) est essentiellement formée de fibres de verre et d'un liant de résine.

8. Ensemble de filtre selon la revendication 1, dans lequel la porosité nominale de la couche poreuse de filtration ne dépasse pas 50 µm.

9. Ensemble de filtre selon la revendication 1, dans lequel la couche poreuse de filtration (11) a une première surface immédiatement adjacente à la première surface de la couche poreuse de support (12).

10. Ensemble de filtre selon la revendication 1, dans lequel chaque cordon (13) forme une bande continue.

11. Ensemble de filtre selon la revendication 1, dans lequel chaque cordon (13) est formé d'une matière qui contient un polyamide.

12. Ensemble de filtre selon la revendication 1, dans lequel chaque cordon (13) est raccordé à la seconde surface de la couche poreuse de support (12).

13. Ensemble de filtre selon la revendication 1, dans lequel chaque cordon (13) a une section circulaire de façon générale.

14. Ensemble de filtre selon la revendication 1, dans lequel les parties de cordon sont associées mutuellement par fusion.

15. Ensemble de filtre selon la revendication 1, dans lequel le milieu poreux de filtration (11) contient essentiellement des fibres de cellulose et en outre des fibres de verre, des fibres de polyester et un liant de résine, et le milieu poreux de support (12) contient essentiellement des fibres de cellulose et a une porosité nominale supérieure à celle de la couche poreuse de filtration (11), et les cordons polymères ( 13) sont composés d'une résine polyamide et les cordons de polyamide placés le long de parties parallèles des côtés opposés du pli (14) sont associés par fusion.

16. Ensemble de filtre selon la revendication 15, dans lequel la couche poreuse de filtration (11) a une porosité nominale comprise entre environ 3 et 25 µm.

17. Ensemble de filtre selon la revendication 1, dans lequel la couche poreuse de filtration (11) est constituée essentiellement de fibres de verre et d'un liant de résine, et la couche poreuse de support (12) comporte essentiellement des fibres de cellulose ayant une porosité nominale supérieure à la porosité nominale de la couche poreuse de filtration (11), et les cordons polymères (13) disposés le long des parties parallèles des côtés opposés du pli (14) sont associés par fusion.

18. Ensemble de filtre selon la revendication 17, dans lequel la couche poreuse de filtration (11) a une porosité nominale comprise entre environ 1 et 50 µm.
